# EUROPEAN PATENT SPECIFICATION

(11) **EP 3 259 552 B1**
(45) Date of publication and mention of the grant of the patent: **05.12.2018**
(21) Application number: 16705189.5
(22) Date of filing: 19.02.2016
(51) Int. Cl.: G01B 7/14, F16C 19/02, F16C 19/52, G01M 13/04

(54) **BEARING WITH A CLEARANCE MEASUREMENT DEVICE**
LAGER MIT EINER ABSTANDSMESSVORRICHTUNG
PALIER DOTÉ D'UN DISPOSITIF DE MESURE D'ESPACE

(30) Priority: 19.02.2015 ES 201530205
(43) Date of publication of application: 27.12.2017
(73) Proprietor: Laulagun Bearings, S.L., 20212 Olaberria, Guipuzcoa (ES)
(72) Inventor: ANDUAGA SALVATIERRA, Javier, 20500 Arrasate (Guipuzcoa) (ES); MITXELENA ALZURI, José María, 20500 Arrasate (Guipuzcoa) (ES); DAMIAN CRUZ, Jorge, 20212 OLABERRIA - Guipuzcoa (ES); REINARES AGIRRETXE, Igor, 20212 OLABERRIA - Guipuzcoa (ES)
(74) Representative: Carvajal y Urquijo, Isabel
(86) International application number: PCT/EP2016/053516
(87) International publication number: WO 2016/131942

(56) References cited:
- WO-A1-2014/090347
- DE-A1-102011 112 826
- US-A1- 2006 045 406
- US-A1- 2008 013 873

## Description

### Field of the Invention

The present invention relates to a bearing with a clearance measurement device, and in particular to a large-sized bearing for the application thereof in wind-driven power generators, incorporating a very compact and efficient clearance measurement device that is easy to place on surfaces existing without the need for making holes.

### Background of the Invention

Measuring clearances in bearings of the type mentioned is extremely important in order to assure the correct operation and safety of said bearings. Bearings of this type are normally formed by two concentric rings between which there are arranged rolling elements (balls, rollers, etc.) which allow relative movement between the rings. In turn, the faces of the rings define distances, the measurement of which allows assessing the evolution of clearances existing between rolling elements and the track. In addition, bearings are subjected to surface fatigue and wear phenomena causing variations in radial and axial clearances between the two rings, the measurement and monitoring of which are very necessary to prevent malfunctions and/or plan maintenance tasks.

Today, one of the most common ways to measure these clearances is done by means of using cylindrical encapsulated inductive sensors, often located outside the bearing. This implies changing the outer dimensions of the bearing, in addition to taking up spaces set aside for other devices or for the passage of maintenance workers. Experience has shown the risk of these external sensors no longer working due to accidents. One solution to this problem consists of integrating the measurement elements in the bearing itself. Nevertheless, distances between faces of the rings, the measurement of which allows determining the existence of clearances, are usually defined between opposite inner faces of the rings of the bearing, which is a very small space, so access thereto is difficult and they do not allow arranging elements therein. Therefore, in order to get the sensor closer to the measurement area holes must be made on the rings. These holes are configured for housing the sensor therein, leaving their measurement end close to the inner face of one of the rings for measuring the distance with respect to the opposite inner face of the other ring. Examples of this embodiment can be seen in the patent documents EP1528356A2 and EP2743522A1.

The need for making holes in the rings of the bearing involves significant problems. First, it complicates the manufacture of the bearing, as it requires additional machining which in turn requires making rather substantial-sized holes on rings with a large span. At the same time the holes must be far enough away from the rolling tracks, otherwise they weaken their resistance under the pressures resulting from the contact of the rolling elements. Furthermore, the presence of holes weakens the section of the ring and increases tangential stresses, even being able to create points where tangential stresses concentrate. Finally, not all areas are valid for taking the measurement because the presence of cages that keep the rolling elements equidistant from one another makes it impossible to use this area for the measurement.

Documents US2008/013873A1 and US2006/045406A1 describe other bearings with inductive clearance sensors having similar problems.

Document WO2014/090347A1 shows a bearing according to the preamble of claim 1, which uses an eddy current sensor integrated in a similar way as mentioned before and, therefore, facing the same problems.

Document DE102011112826A1 shows an eddy current sensor.

The present invention comprises a bearing with a clearance measurement device according to claim 1 and solves the problems described above as a result of a bearing integrating a clearance measurement device having an eddy current sensor with an inductive module having a flat configuration and reduced thickness. This allows arranging said inductive module in the space between rings the distance of which is to be measured, without having to make holes in the bearing for housing said module. Its shape (both in width and in height) can be adapted to the inner surface of the faces of the bearing, for the purpose of using the available space in each case and taking more effective and precise measurements, while at the same time having a configuration that is specially designed to reduce power consumption, the range of measurement, and to prevent the magnetic influence of other elements not participating in the measurement.

### Description of the Invention

The bearing for measuring clearances of the present invention comprises:
- a first ring having a first face;
- a second ring having a second face opposite the first face, a distance being defined between both faces, the measurement of which allows knowing the clearance;
- one or more rolling elements, such as balls or rollers, arranged between the first ring and the second ring, which allow relative movement between both rings; and
- at least one eddy current sensor configured for measuring the distance between the first and the second face, and according to said distance determining the radial or axial dimension of the clearance.

The bearing of the present invention is characterized in that the eddy current sensor comprises an inductive module having a flat configuration formed in a printed circuit board, integrating at least one coil; and in that said inductive module is arranged on one of the faces to allow measuring the distance with respect to the opposite face.

Therefore, given the reduced size of the inductive module, it can be arranged in the actual space between the faces the distance of which is to be measured, without having to make holes in the bearing for housing said module. Among the various solutions for the assembly of said inductive module, it is preferably housed in a perimetral recess located next to a sealing ring of the bearing. This provides greater protection for the inductive module, in addition to locating said module in a more accessible area.

The operation of the eddy current sensor is based on the detection of variations in the magnetic field generated by the coil of the inductive module, which occur when the distance between the rings of the bearing changes. Specifically, by arranging the inductive module on a first face of a first ring, a primary magnetic field striking a second face, opposite the first face, of a second ring is generated. This causes the occurrence of eddy currents in said second face, which in turn generate a magnetic field that opposes the primary magnetic field, modifying the behavior of the magnetic circuit generated by the coil. This modification depends on the magnetic field that opposes the primary field, its magnitude being a function of the distance existing between the coil and the surface which the primary magnetic field strikes.

The magnetic field generated by the inductive module goes in both directions of the axis of the coil, being influenced both by the face where said module is placed, and by the opposite face the distance of which is to be measured. Therefore, the face on which the inductive module is placed has a greater influence on the variation in the primary magnetic field than the opposite face. To prevent said influence, preferably the inductive module comprises a sheet of ferritic material arranged between the coil and the face on which it is arranged. Said sheet has a dual effect: a) to eliminate the influence of the face, or wall, on which is located the inductive module, and, b) to increase the intensity of the magnetic field striking the opposite face, or wall. This sheet of ferritic material has a reduced thickness to prevent the thickness of the inductive module from significantly increasing. Thicknesses of less than 1 mm can correctly perform the described functions.

Given that the coil generates a cavity in its center, an empty space is obtained the height of which coincides with that of the printed circuit board. In order to even further increase the intensity of the magnetic field striking the opposite face the distance of which is to be measured, preferably the inductive module comprises a ferrite arranged in the central cavity defined in the center of the coil. In the case of a circular coil, this ferrite is preferably cylindrical, whereas for elongated coils the ferrite widens in order to take up a larger part of the cavity. Therefore, the base of this ferrite adapts to the perimeter of the cavity, whereas its height changes as a function of the thickness of the inductive module.

The following dimensions are indicated by way of example: a circular coil having an inner diameter of 4 mm and an outer diameter of 7 mm, arranged in a printed circuit board with a thickness of 1.5 mm having a sheet of ferritic material with a thickness of 0.5 mm, arranging in the central cavity of the coil a ferrite with a cylindrical shape having a diameter of 3 mm and a length of 2 mm. All this is for the purpose of forming an inductive module having a thickness between 2 and 3 mm, with a square or rectangular base with sides between 7 and 10 mm.

Preferably the inductive module comprises a resonant circuit, formed by the coil and by the actual capacitance thereof, to which an electric capacitor can be added. This capacitor is also made within the printed circuit board so as to not increase the thickness of the inductive module.

The distance to be measured in the radial direction of the rings is very reduced, generally being at values close to 10 mm or less. Therefore the thickness of the inductive module must be less than these values, for example between 2 and 3 mm. Likewise, the available height in the first face and in the second face according to the direction of the axial axis of the rings is also very reduced. Furthermore, the rolling elements and also the cages keeping said rolling elements equidistant from one another are located between the rings. Therefore, the height of the inductive module according to the axial axis is limited by these circumstances. Nevertheless, the available width in the faces according to the perimeter of the rings, being understood as in the longitudinal direction thereof, can reach up to several meters. In other words, the coil can be elongated in that direction in order to obtain a larger coil, which allows measuring greater distances and/or measuring with greater precision. As a result, preferably the coil is widened in the longitudinal direction of the face on which the inductive module is arranged, having a width greater than its height, which allows it to have an oval, elliptical or substantially rectangular shape (rectangle with rounded corners).

In turn, the coil can be developed using one or several layers of the printed circuit board, connecting the turns of one layer with those of the previous layer and the next layer, thereby increasing the inductance of the resulting coil by multiplying the number of turns of each layer by the number of layers. Preferably, the coil comprises a plurality of turns connected in series which are arranged on a plurality of layers of the printed circuit board.

The eddy current sensor comprises an excitation and measurement module configured for exciting the coil and measuring variations in the magnetic field generated by it in order to obtain the value of the distance with respect to the opposite face. Preferably, the excitation and measurement module is configured for making the inductive module operate at resonance frequency. This resonance frequency is a function of the inductance and capacitance of the circuit, the inductance being a function of the distance at which the face opposite the inductive module is located, so the distance is determined from this oscillation frequency. This way of making the circuit operate allows considerably reducing its power consumption.

Preferably the excitation and measurement module is arranged separately from the inductive module, for example in an area where there are no space limitations, and connected thereto by means of wiring or in a wireless manner.

According to a preferred embodiment of the present invention, the bearing comprises two eddy current sensors, where:
- a first eddy current sensor has a first inductive module arranged on one of the faces to allow measuring a first distance with respect to the opposite face, both faces being parallel; and
- a second eddy current sensor has a second inductive module arranged on one of the faces to allow measuring a second distance with respect to the opposite face, one face being oblique to the other face according to a known inclination.

When said faces are parallel to the axial axis of the bearing, the first eddy current sensor allows measuring the distance in the radial direction of the bearing (or of the rings), and depending on this, determining the dimension of the clearance in that direction, i.e., radial clearance, as a value depending directly on the first distance with respect to the opposite face.

When a face is parallel to the axial axis of the bearing, and the opposite face is oblique to same according to a known inclination, the second eddy current sensor allows measuring the distance in the axial direction of the bearing (or of the rings), and depending on this, determining the dimension of the clearance in that direction, i.e., axial clearance, as a value that is obtained from combining the measurement of the first eddy current sensor and the measurement of the second eddy current sensor.

The eddy current sensor for measuring clearances in general comprises:
- an inductive module having a flat configuration formed in a printed circuit board, integrating at least one coil; and
- an excitation and measurement module configured for exciting the coil and measuring variations in the magnetic field generated by it, which is arranged separately from the inductive module and connected thereto.

Preferably, the excitation and measurement module is connected to the inductive module by means of wiring, although the option of making said connection in a wireless manner is also contemplated.

The magnetic field generated by the inductive module goes in both directions of the axis of the coil, being influenced both by the face, or wall, where said module is placed, and by the opposite face, or wall, the distance of which is to be measured. Therefore, the face on which the inductive module is placed has a greater influence on the variation in the primary magnetic field than the opposite face. To prevent said influence, preferably the inductive module comprises a sheet of ferritic material arranged between the coil and the face on which it is arranged. Said sheet has a dual effect: a) to eliminate the influence of the face, or wall, on which is located the inductive module, and b) to increase the intensity of the magnetic field striking the opposite face, or wall. This sheet of ferritic material has a reduced thickness to prevent the thickness of the inductive module from significantly increasing. Thicknesses of less than 1 mm can correctly perform the described functions.

Given that the coil generates a cavity in its center, an empty space is obtained, the height of which coincides with that of the printed circuit board. In order to even further increase the intensity of the magnetic field striking the opposite face the distance of which is to be measured, preferably the inductive module comprises a ferrite arranged in the central cavity defined in the center of the coil. In the case of a circular coil, this ferrite is preferably cylindrical, whereas for elongated coils the ferrite widens in order to take up a larger part of the cavity. Therefore, the base of this ferrite adapts to the perimeter of the central cavity, whereas its length changes as a function of the thickness of the inductive module.

The following dimensions are indicated by way of example: a circular coil having an inner diameter of 4 mm and an outer diameter of 7 mm, arranged in a printed circuit board with a thickness of 1.5 mm having a sheet of ferritic material with a thickness of 0.5 mm, arranging in the central cavity of the coil a ferrite with a cylindrical shape having a diameter of 3 mm and a length of 2 mm. All this is for the purpose of forming an inductive module having a thickness between 2 and 3 mm, with a square or rectangular base with sides between 7 and 10 mm.

Preferably the inductive module comprises a resonant circuit, formed by the coil and by the actual capacitance thereof, to which an electric capacitor can be added. This capacitor is also made within the printed circuit board so as to not increase the thickness of the inductive module.

According to the case of application, the coil can have a width greater than its height, which allows it to have an oval, elliptical or substantially rectangular shape. In other words, the coil can be elongated in a given direction in order to obtain a larger coil, which allows measuring greater distances and/or measuring with greater precision.

In turn, the coil can be developed using one or several layers of the printed circuit board, connecting the turns of one layer with those of the previous layer and the next layer, thereby increasing the inductance of the resulting coil by multiplying the number of turns of each layer by the number of layers. Preferably, the coil comprises a plurality of turns connected in series which are arranged on a plurality of layers of the printed circuit board.

The eddy current sensor comprises an excitation and measurement module configured for exciting the coil and measuring variations in the magnetic field generated by it. Preferably, the excitation and measurement module is configured for making the inductive module operate at resonance frequency. This resonance frequency is a function of the inductance and capacitance of the circuit, the inductance being a function of the distance at which the face opposite the inductive module is located, so the distance is determined from this oscillation frequency. This way of making the circuit operate allows considerably reducing its power consumption.

### Brief Description of the Drawings

A series of drawings that help to better understand the invention and which are expressly related to several embodiments of said invention shown as non-limiting examples thereof is very briefly described below.
Figure 1 depicts a perspective section view of a large-sized bearing.
Figure 2 depicts a partial cross-section view of the bearing of the present invention, according to a first preferred embodiment.
Figure 3 depicts a view of detail "V" of Figure 2.
Figure 4 depicts a front view of the inner face of the first ring of Figure 2.
Figure 5 depicts a schematic perspective view of the inductive module, according to a first configuration example.
Figure 6 depicts a schematic perspective view of the inductive module, according to a second configuration example.
Figure 7 depicts a first schematic view of the sensor.
Figure 8 depicts a schematic view of the coil, according to a circular configuration thereof.
Figure 9 depicts a schematic view of the coil, according to an oval configuration thereof.
Figure 10 depicts a schematic view of the coil, according to a rounded rectangular configuration thereof.
Figure 11 depicts an exploded schematic view of a multilayer coil.
Figure 12 depicts a partial cross-section view of the bearing of the present invention, according to a second preferred embodiment.
Figure 13 depicts a view of detail "W" of Figure 12.
Figure 14 depicts a front view of the inner face of the first ring of Figure 12.
Figure 15 depicts a second schematic view of the sensor.

### Detailed Description of the Invention

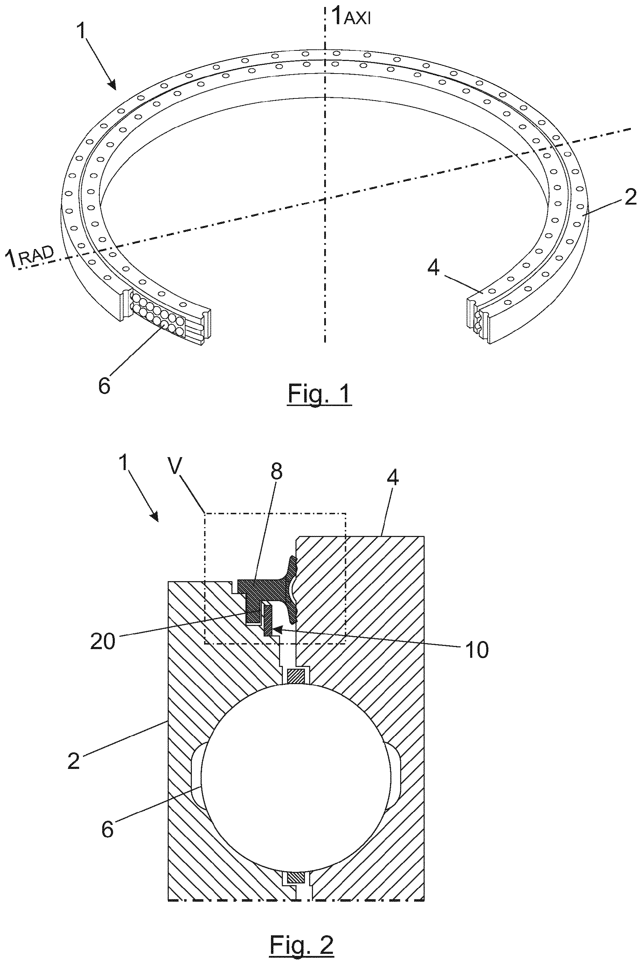

Figure 1 shows a perspective section view of a large-sized bearing, in which a first ring (2) and a second ring (4) concentric to one another are seen, the axial and radial axes of which coincide respectively with the axial axis (1_{AXI}) and with the radial axis (1_{RAD}) of the bearing (1). Between the rings (2, 4) there are arranged rolling elements (6), housed in a cage according to the present example, to allow relative rotational movement between both rings (2, 4).

As seen in Figures 2-4, the bearing (1) with a clearance measurement device of the present invention, according to a first preferred embodiment, comprises:
- a first ring (2) having a first face (3);
- a second ring (4), concentric to the first ring (2), having a second face (5) opposite the first face (3), a distance (dS) being defined between both faces (3, 5);
- a plurality of rolling elements (6), in this case balls, arranged between the first ring (2) and the second ring (4), which allow relative rotational movement between both rings (2, 4); and
- an eddy current sensor (10) configured for measuring the distance (dS) between the first face (3) and the second face (5), and as a function thereof determining the variation in clearance between the rolling element and the track.

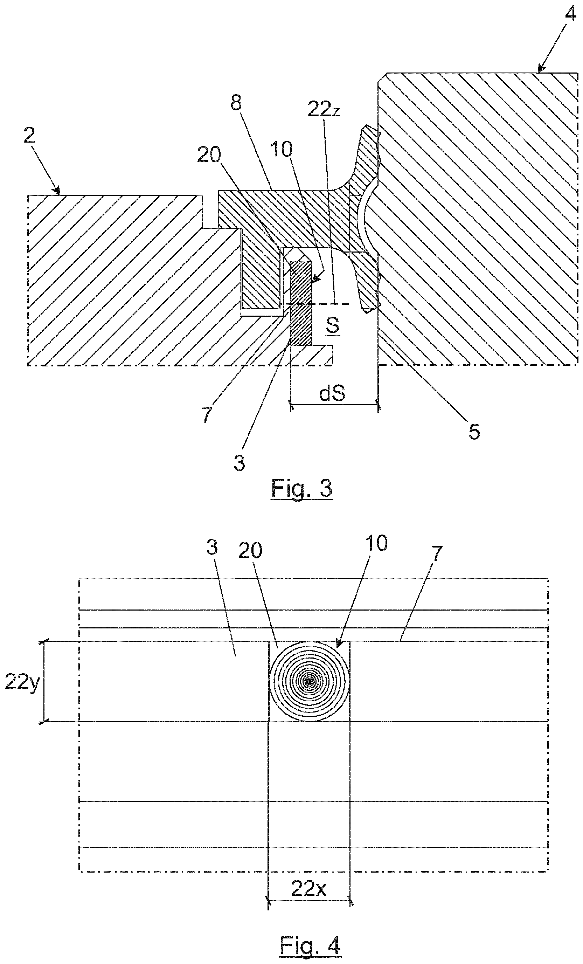

The eddy current sensor (10) comprises an inductive module (20) having a flat configuration formed in a printed circuit board (21), integrating at least one coil (22), Figures 4-5, and which is arranged on the first face (3) to allow measuring the distance (dS) with respect to the second face (5).

Therefore, given the reduced size of the inductive module (20), the latter can be arranged suitably in the actual space (S) where the distance (dS) to be measured is located, without having to make holes in the bearing (1). According to the present example, the inductive module (20) is housed in a perimetral recess (7) located next to a sealing ring (8) of the bearing (1). This provides greater protection to the inductive module (20), in addition to locating it in a more accessible area. The sealing ring (8) is made from an insulating material, so eddy currents are not induced on same, but rather the generated magnetic field goes through it, such that its presence no has influence on the measurement.

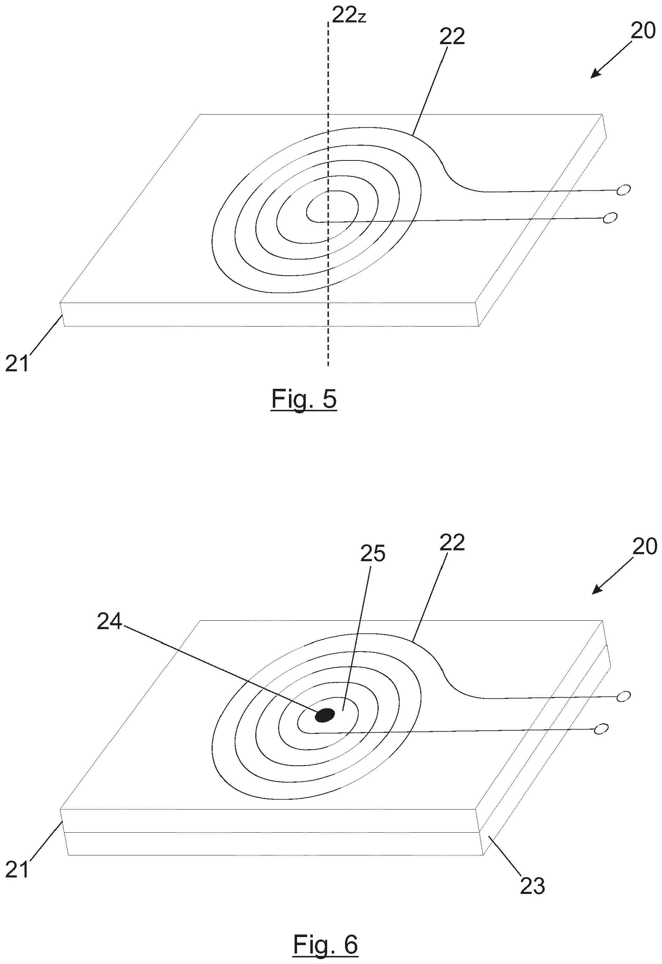

The magnetic field generated by the inductive module (20) of Figure 5 goes in both directions of the axis (22z) of the coil (22), being able to be influenced both by the face where said inductive module (20) is placed, and by the opposite face the distance of which is to be measured. To prevent said influence, the inductive module (20) comprises a sheet (23) of ferritic material, Figure 6, such that it is arranged between the coil (22) and the first face (3). Said sheet (23) has a dual effect: a) to eliminate the influence of the first face (3) on which the inductive module (20) is located, and b) to increase the intensity of the magnetic field striking the second face (5) the distance of which is to be measured. This sheet (23) of ferritic material has a reduced thickness to prevent the thickness of the inductive module (20) from significantly increasing.

As seen in Figures 5 and 6, given that the coil (22) generates a central cavity (25), an empty space is obtained the height of which coincides with that of the printed circuit board (21). In order to even further increase the intensity of the magnetic field striking the second face (5), the inductive module (20) comprises a ferrite (24) arranged in the central cavity (25) defined in the center of the coil (22). In the case of a circular coil (22) like the one in the present example, this ferrite (24) has a cylindrical shape.

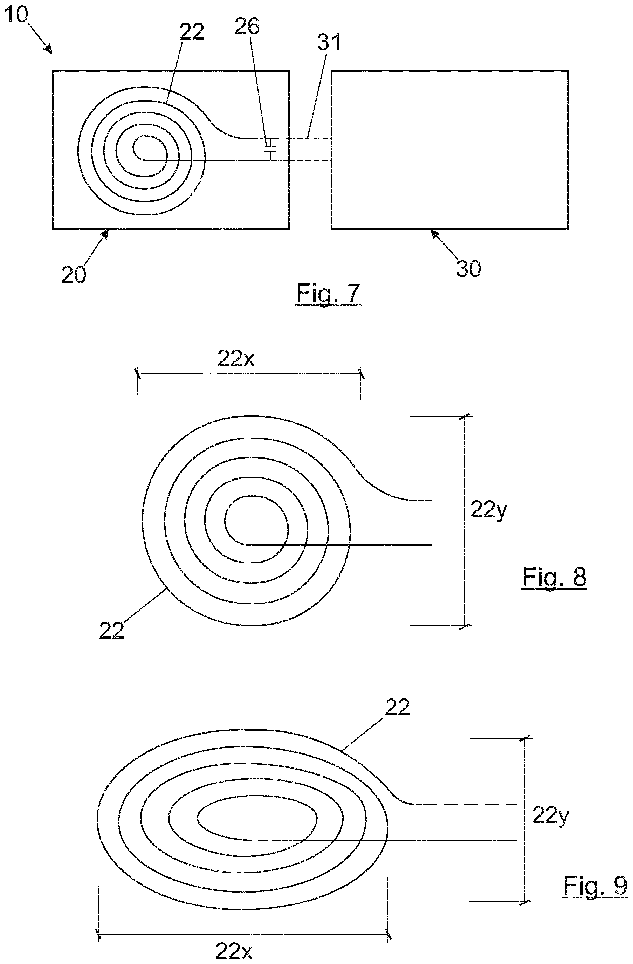

As seen in Figure 7, the inductive module (20) comprises a resonant circuit, formed by the coil (22) and by the actual capacitance thereof, to which an electric capacitor (26) is added. This capacitor (26) is also made within the printed circuit board (21) so as to not increase the thickness of the inductive module (20).

The eddy current sensor (10) comprises an excitation and measurement module (30) configured for exciting the coil (22) and measuring variations in the magnetic field generated by it in order to obtain the value of the distance (dS). This excitation and measurement module (30) is configured for making the inductive module (20) operate at resonance frequency. The excitation and measurement module (30) is arranged separately from the inductive module (20), for example in an area where there are no space limitations, and connected thereto by means of wiring (31).

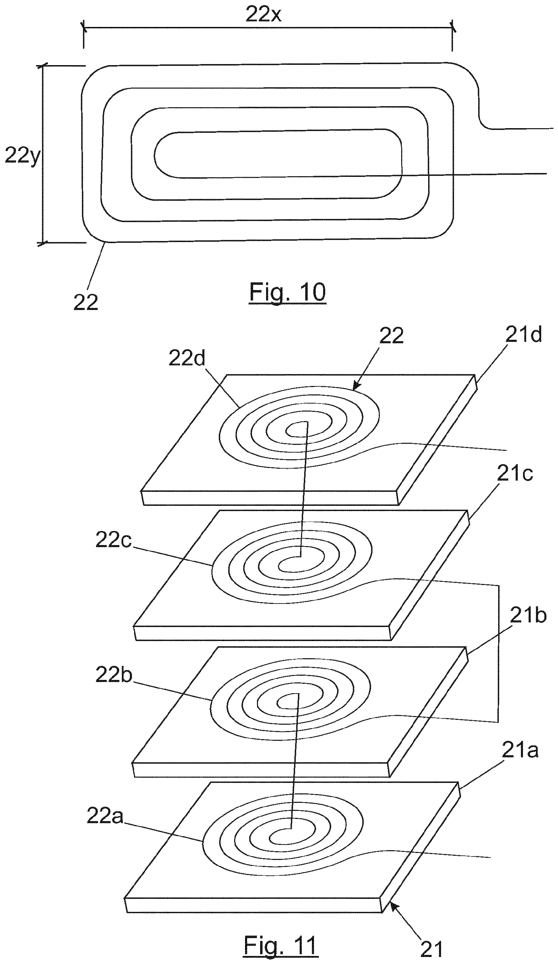

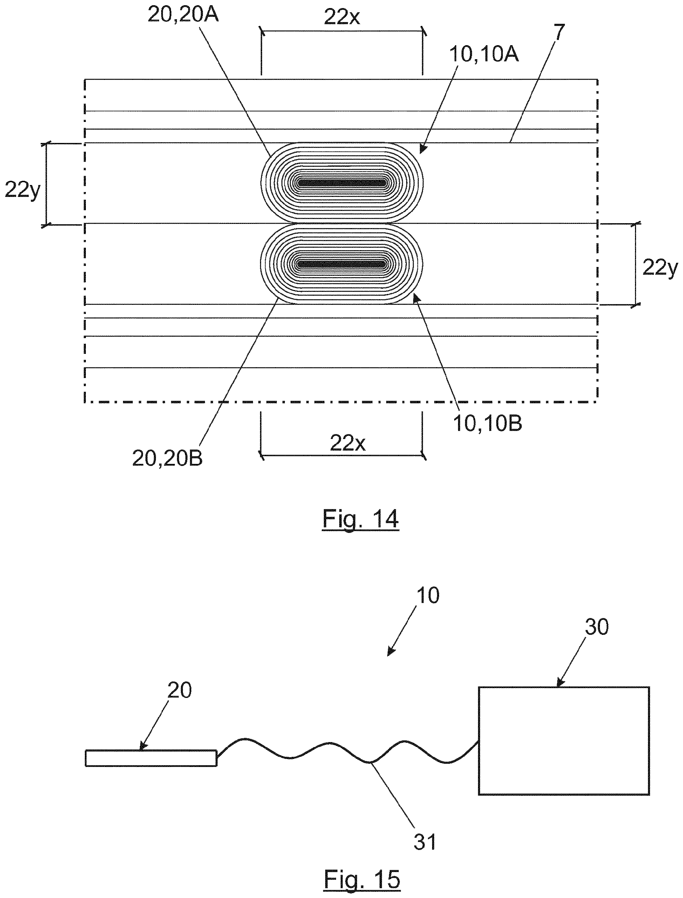

Figures 8, 9 and 10 show a circular, oval and rounded rectangular coil (22), respectively. Specifically, in Figures 9 and 10 it is seen that the coil (22) has a width (22_{X}) greater than its height (22_{Y}), being able to widen in the longitudinal direction of the first face (3), as shown in Figure 14.

As seen in Figure 11, the coil (22) can be developed using several layers of the printed circuit board (21), connecting the turns of one layer with those of the previous layer and the next layer, thereby increasing the inductance of the resulting coil (22). According to the example of Figure 11, the coil (22) comprises four turns (22a, 22b, 22c, 22d) connected in series, where each of them is arranged in its corresponding layer (21a, 21b, 21c, 21d) of the printed circuit board (21).

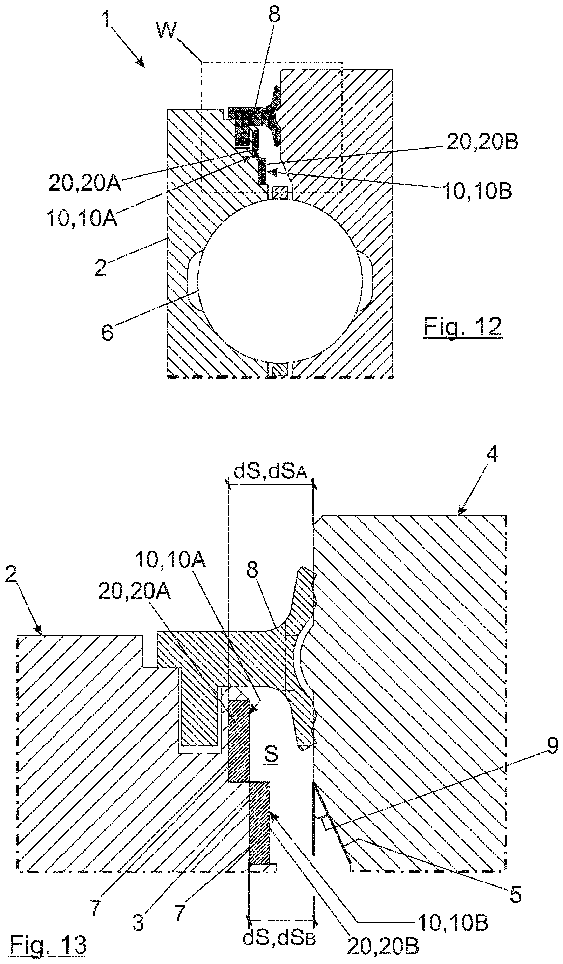

As seen in Figures 12-14, the bearing (1) with a clearance measurement device of the present invention, according to a second preferred embodiment, comprises two eddy current sensors (10), where:
- a first eddy current sensor (10A) has a first inductive module (20A) arranged on the first face (3) to allow measuring a first distance (dS_{A}) with respect to an opposite second face (5), both faces (3, 5) being parallel; and
- a second eddy current sensor (10B) has a second inductive module (20B) arranged on the first face (3) to allow measuring a second distance (dS_{B}) with respect to the opposite second face (5), the first face (3) being parallel to the axial axis (1_{AXI}) of the bearing (1) and the opposite second face (5) being oblique to the previous one according to a known inclination (9).

Therefore, the first eddy current sensor (10A) allows measuring the distance in the radial direction of the rings (2, 4), and as a function thereof determining the variation in the radial clearance, as a value depending directly on the first distance (dS_{A}). In turn, the second eddy current sensor (10A) allows measuring the distance in the axial direction of the rings (2, 4), and as a function thereof determining the variation in the axial clearance, as a value obtained from combining the measurement of the first eddy current sensor (10A) and the measurement of the second eddy current sensor (10B).

The arrows indicating the radial distance (S_{RAD}) and the axial distance (S_{AXI}) depict the relative movements produced between both rings (2, 4).

As seen in Figure 14, according to the present example, the coils (22) of the first eddy current sensor (10A) and of the second eddy current sensor (10B) widen in the longitudinal direction of the first face (3) to form an oval shape.

The eddy current sensor for measuring clearances in general comprises:
- an inductive module (20) having a flat configuration formed in a printed circuit board (21), integrating at least one coil (22); and
- an excitation and measurement module (30) configured for exciting the coil (22) and measuring variations in the magnetic field generated by it, which is arranged separately from the inductive module (20) and connected thereto by means of wiring (31).

The magnetic field generated by the inductive module (20) of Figure 5 goes in both directions of the axis (22_{Z}) of the coil (22), being able to be influenced both by the face where said inductive module (20) is placed, and by the face the distance of which is to be measured. To prevent said influence, the inductive module (20) comprises a sheet (23) of ferritic material, Figure 6, such that once it is arranged it is located between the coil (22) and the face on which the inductive module (20) is placed. Said sheet (23) has a dual effect: a) to eliminate the influence of the face on which the inductive module (20) is placed, and b) to increase the intensity of the magnetic field striking the face the distance of which is to be measured. This sheet (23) of ferritic material has a reduced thickness to prevent the thickness of the inductive module (20) from significantly increasing.

As seen in Figures 5 and 6, given that the coil (22) generates a central cavity (25), an empty space is obtained the height of which coincides with that of the printed circuit board (21). In order to even further increase the intensity of the magnetic field striking the face the distance of which is to be measured, the inductive module (20) comprises a ferrite (24) arranged in the central cavity (25) defined in the center of the coil (22). In the case of a circular coil (22) like the one in the present example, this ferrite (24) has a cylindrical shape.

As seen in Figure 7, the inductive module (20) comprises a resonant circuit, formed by the coil (22) and by the actual capacitance thereof, to which an electric capacitor (26) is added. This capacitor (26) is also made within the printed circuit board (21), so as to not increase the thickness of the inductive module (20).

The eddy current sensor (10) comprises an excitation and measurement module (30) configured for exciting the coil (22) and measuring variations in the magnetic field generated by it. This excitation and measurement module (30) is configured for making the inductive module (20) operate at resonance frequency. The excitation and measurement module (30) is arranged separately from the inductive module (20), for example in an area where there are no space limitations, and connected thereto by means of wiring (31).

Figures 8, 9 and 10 show a circular, oval and rounded rectangular coil (22), respectively. Specifically in Figures 9 and 10, it is seen that the coil (22) has a width (22_{X}) greater than its height (22_{Y}), being able to widen in the longitudinal direction of the support surface, as shown in Figure 14.

As seen in Figure 11, the coil (22) can be developed using several layers of the printed circuit board (21), connecting the turns of one layer with those of the previous layer and the next layer, thereby increasing the inductance of the resulting coil (22). According to the example of Figure 11, the coil (22) comprises four turns (22a, 22b, 22c, 22d) connected in series, where each of them is arranged in its corresponding layer (21a, 21b, 21c, 21d) of the printed circuit board (21).

## Claims

1. A bearing with a clearance measurement device, comprising:
• a first ring (2) having a first face (3);
• a second ring (4) having a second face (5) opposite the first face (3), a distance (dS) being defined between both faces (3, 5);
• one or more rolling elements (6) arranged between the first ring (2) and the second ring (4), which allow relative movement between both rings (2, 4); and
• an eddy current sensor (10) configured for measuring the distance (dS) between the first face (3) and the second face (5);
said bearing (1) **characterized in that** the eddy current sensor (10) comprises an inductive module (20) having a flat configuration formed in a printed circuit board (21), integrating at least one coil (22); and **in that** said inductive module (20) is arranged on one of the faces (3, 5) to allow measuring the distance (dS) with respect to the opposite face (3, 5).

2. The bearing with a clearance measurement device according to claim 1, **characterized in that** the inductive module (20) is housed in a perimetral recess (7) located next to a sealing ring (8) of the bearing (1).

3. The bearing with a clearance measurement device according to any of claims 1 to 2, **characterized in that** the inductive module (20) comprises a sheet (23) of ferritic material arranged between the coil (22) and the face (3, 5) on which it is arranged.

4. The bearing with a clearance measurement device according to any of claims 1 to 3, **characterized in that** the inductive module (20) comprises a ferrite (24) arranged in a central cavity (25) defined in the center of the coil (22).

5. The bearing with a clearance measurement device according to any of claims 1 to 4, **characterized in that** the inductive module (20) comprises a resonant circuit formed by the coil (22) and by an electric capacitor (26).

6. The bearing with a clearance measurement device according to any of claims 1 to 5, **characterized in that** the coil (22) is widened in the longitudinal direction of the face (3, 5) on which the inductive module (20) is arranged, having a width (22_{X}) greater than its height (22_{Y}), which allows it to have an oval, elliptical or substantially rectangular shape.

7. The bearing with a clearance measurement device according to any of claims 1 to 6, **characterized in that** the coil (22) comprises a plurality of turns (22a, 22b, 22c, 22d) connected in series which are arranged on a plurality of layers (21a, 21b, 21c, 21d) of the printed circuit board (21).

8. The bearing with a clearance measurement device according to any of claims 1 to 7, **characterized in that** it comprises two eddy current sensors (10), where:
• a first eddy current sensor (10A) has a first inductive module (20A) arranged on one of the faces (3, 5) to allow measuring a first distance (dS_{A}) with respect to the opposite face (3, 5), both faces (3, 5) being parallel; and
• a second eddy current sensor (10B) has a second inductive module (20B) arranged on one of the faces (3, 5) to allow measuring a second distance (dS_{B}) with respect to the opposite face (3, 5), one face (3, 5) being oblique to the other face (3, 5) according to a known inclination (9).

## Patentansprüche

1. Lager mit einer Abstandsmessvorrichtung, umfassend:
• einen ersten Ring (2) mit einer ersten Fläche (3);
• einen zweiten Ring (4) mit einer der ersten Fläche (3) gegenüberliegenden zweiten Fläche (5), wobei zwischen beiden Flächen (3, 5) ein Abstand (dS) definiert ist;
• einen oder mehrere zwischen dem ersten Ring (2) und dem zweiten Ring (4) angeordnete Rollkörper (6), die eine relative Bewegung zwischen beiden Ringen (2, 4) ermöglichen; und
• einen Wirbelstromsensor (10), der zum Messen des Abstands (dS) zwischen der ersten Fläche (3) und der zweiten Fläche (5) gestaltet ist;
wobei das Lager (1) **dadurch gekennzeichnet ist, dass** der Wirbelstromsensor (10) ein induktives Modul (20) mit einer flachen Gestaltung umfasst, die in einer Leiterplatte (21) mit mindestens einer Spule (22) gebildet ist; und dadurch, dass das induktive Modul (20) auf einer der Flächen (3, 5) angeordnet ist, um das Messen des Abstands (dS) in Bezug auf die gegenüberliegende Fläche (3, 5) zu ermöglichen.

2. Lager mit einer Abstandsmessvorrichtung nach Anspruch 1, **dadurch gekennzeichnet, dass** sich das induktive Modul (20) in einer neben einem Dichtring (8) des Lagers (1) liegenden Umfangsaussparung (7) aufgenommen ist.

3. Lager mit einer Abstandsmessvorrichtung nach einem der Ansprüche 1 bis 2, **dadurch gekennzeichnet, dass** das induktive Modul (20) eine Platte (23) aus ferritischem Werkstoff umfasst, das zwischen der Spule (22) und der Fläche (3, 5) angeordnet ist, an der es angeordnet ist.

4. Lager mit einer Abstandsmessvorrichtung nach einem der Ansprüche 1 bis 3, **dadurch gekennzeichnet, dass** das induktive Modul (20) einen Ferrit (24) umfasst, der in einem zentralen, in der Mitte der Spule (22) definierten Hohlraum (25) angeordnet ist.

5. Lager mit einer Abstandsmessvorrichtung nach einem der Ansprüche 1 bis 4, **dadurch gekennzeichnet, dass** das induktive Modul (20) einen aus der Spule (22) und einem elektrischen Kondensator (26) gebildeten Schwingkreis umfasst.

6. Lager mit einer Abstandsmesseinrichtung nach einem der Ansprüche 1 bis 5, **dadurch gekennzeichnet, dass** die Spule (22) in Längsrichtung der Fläche (3, 5), an der das induktive Modul (20) angeordnet ist, geweitet ist, wobei sie eine größere Breite (22ₓ) als Höhe (22_{Y}) aufweist, die es ihr ermöglicht eine ovale, elliptische oder im Wesentlichen rechteckige Form aufzuweisen.

7. Lager mit einer Abstandsmessvorrichtung nach einem der Ansprüche 1 bis 6, **dadurch gekennzeichnet, dass** die Spule (22) mehrere in Reihe geschaltete Windungen (22a, 22b, 22c, 22d) umfasst, die in mehreren Schichten (21a, 21b, 21c, 21d) der Leiterplatte (21) angeordnet sind.

8. Lager mit einer Abstandsmessvorrichtung nach einem der Ansprüche 1 bis 7, **dadurch gekennzeichnet, dass** es zwei Wirbelstromsensoren (10) umfasst, wobei:
• ein erster Wirbelstromsensor (10A) ein erstes induktives, auf einer der Flächen (3, 5) angeordnetes Modul (20A) aufweist, um das Messen eines ersten Abstands (dS_{A}) in Bezug auf die gegenüberliegende Fläche (3, 5) zu ermöglichen, wobei beide Flächen (3, 5) parallel sind; und
• ein zweiter Wirbelstromsensor (10B) ein zweites induktives, auf einer der Flächen (3, 5) angeordnetes Modul (20B) aufweist, um das Messen eines zweiten Abstands (dS_{B}) in Bezug auf die gegenüberliegende Fläche (3, 5) zu ermöglichen, wobei eine Fläche (3, 5) um eine bekannte Neigung (9) schräg zur anderen Fläche (3, 5) gestellt ist.

## Revendications

1. Palier avec un dispositif de mesure de jeu, comprenant :
• un premier anneau (2) ayant une première face (3) ;
• un deuxième anneau (4) ayant une deuxième face (5) en regard de la première face (3), une distance (dS) étant définie entre les deux faces (3, 5) ;
• un ou plusieurs éléments de roulement (6) disposés entre le premier anneau (2) et le deuxième anneau (4), qui permettent un mouvement relatif entre les deux anneaux (2, 4) ; et
• un capteur à courants de Foucault (10) configuré pour mesurer la distance (dS) entre la première face (3) et la deuxième face (5) ;
ledit palier (1) **caractérisé en ce que** le capteur à courants de Foucault (10) comprend un module inductif (20) ayant une configuration plate formée dans une carte de circuit imprimé (21), intégrant au moins une bobine (22) ; et **en ce que** ledit module inductif (20) est disposé sur l'une des faces (3, 5) pour permettre la mesure de la distance (dS) par rapport à la face opposée (3, 5).

2. Palier avec un dispositif de mesure de jeu selon la revendication 1, **caractérisé en ce que** le module inductif (20) est logé dans un renfoncement périphérique (7) situé à proximité d'une bague d'étanchéité (8) du palier (1).

3. Palier avec un dispositif de mesure de jeu selon l'une quelconque des revendications 1 à 2, **caractérisé en ce que** le module inductif (20) comprend une feuille (23) de matériau ferritique disposée entre la bobine (22) et la face (3, 5) sur laquelle il est disposé.

4. Palier avec un dispositif de mesure de jeu selon l'une quelconque des revendications 1 à 3, **caractérisé en ce que** le module inductif (20) comprend une ferrite (24) disposée dans une cavité centrale (25) définie au centre de la bobine (22).

5. Palier avec un dispositif de mesure de jeu selon l'une quelconque des revendications 1 à 4, **caractérisé en ce que** le module inductif (20) comprend un circuit résonnant constitué de la bobine (22) et d'un capaciteur électrique (26).

6. Palier avec un dispositif de mesure de jeu selon l'une quelconque des revendications 1 à 5, **caractérisé en ce que** la bobine (22) est élargie dans le sens longitudinal de la face (3, 5) sur laquelle le module inductif (20) est disposé, ayant une largeur (22ₓ) plus importante que sa hauteur (22_{Y}), qui lui permet d'avoir une forme ovale, elliptique ou sensiblement rectangulaire.

7. Palier avec un dispositif de mesure de jeu selon l'une quelconque des revendications 1 à 6, **caractérisé en ce que** la bobine (22) comprend une pluralité de tours (22a, 22b, 22c, 22d) raccordés en série qui sont disposés sur une pluralité de couches (21a, 21b, 21c, 21d) de la carte de circuit imprimé (21).

8. Palier avec un dispositif de mesure de jeu selon l'une quelconque des revendications 1 à 7, **caractérisé en ce qu'**il comprend deux capteurs à courants de Foucault (10), où :
• un premier capteur à courants de Foucault (10A) a un premier module inductif (20A) disposé sur l'une des faces (3, 5) pour permettre la mesure d'une première distance (dS_{A}) par rapport à la face opposée (3, 5), les deux faces (3, 5) étant parallèles ; et
• un deuxième capteur à courants de Foucault (10B) a un deuxième module inductif (20B) disposé sur l'une des faces (3, 5) pour permettre la mesure d'une deuxième distance (dS_{B}) par rapport à la face opposée (3, 5), une face (3, 5) étant oblique à l'autre face (3, 5) selon une inclinaison connue (9).
